# EUROPÄISCHE PATENTSCHRIFT

(11) **EP 0 377 161 B1**
(45) Veröffentlichungstag und Bekanntmachung des Hinweises auf die Patenterteilung: **15.12.1993**
(21) Anmeldenummer: 89123294.4
(22) Anmeldetag: 15.12.1989
(51) Int. Cl.: A21C 1/00

(54) **Verfahren und Vorrichtung zur Aufarbeitung von Restteig zu Neuteig**
Method and device for reprocessing waste dough into new dough
Méthode et appareil pour le travail de déchet de pâte pour la production de pâte neuve

(30) Priorität: 31.12.1988 DE 3844440
(43) Veröffentlichungstag der Anmeldung: 11.07.1990
(73) Patentinhaber: A. FRITSCH GMBH & CO. KG, D-97348 Markt Einersheim (DE)
(72) Erfinder: Elgner Rudolf, D-8711 Markt Einersheim (DE); Gelé François, F-91801 Brunoy Cedex (FR)
(74) Vertreter: Matschkur, Götz, Lindner Patent- und Rechtsanwälte

(56) Entgegenhaltungen:
- FR-A- 584 306
- FR-A- 2 161 714
- US-A- 3 880 069
- US-A- 3 927 611
- US-A- 3 947 597

## Beschreibung

Die Erfindung richtet sich auf ein Verfahren zum Aufarbeiten von Restteig zu Neuteig.

In dem Dokument US-A-3 947 597 ist ein Verfahren zur Herstellung einer einheitlichen Teigmischung, die Restteig enthält, veröffentlicht. Der Restteig resultiert aus dem Schneiden von beabstandeten Teigstücken aus einem kontinuierlichen Teigband und wird einem Mischgerät zugeführt, nachdem zusätzliche, neue Teigingredienzen hinzugegeben worden sind. Der Restteig wird kontinuierlich mit neuem, frischen Teig gemischt, bis der Gesamtteig voll entwickelt ist. Allerdings findet ein Zerkleinern und Zermahlen des Restteigs nicht statt, so daß eine ausreichende Vermischung mit Zutaten bzw. Ingredienzen nicht gewährleistet ist. Außerdem ist das veröffentlichte Herstellungsverfahren ohne die Verwendung eines wesentlichen Anteils an frischem Neuteig nicht durchführbar.

Bei der Verarbeitung der verschiedensten Teigsorten auf Hochleistungsmaschinen entsteht, insbesondere bei der Herstellung von Pasteten, aber vor allem auch bei der Verarbeitung runder Teigstücke ein Restteiganfall in der Größenordnung von 35 % bis zu 45 % der eingesetzten Teigmenge. Diesen sogenannten Restteig der weiteren sinnvollen Verarbeitung zuzuführen, stellt an die Produktionsbetriebe und die von diesen verwendeten Backtechnologien außerordentlich große Probleme. Wird nämlich der Restteig beispielsweise in anteilsmäßig gleichbleibender Menge den jeweils zu verarbeitenden Chargen des Neuteigs während eines Arbeitstages zugesetzt, nimmt die Qualität des Neuteigs annähernd im gleichen Verhältnis ab oder führt zumindest zu einer Veränderung des Neuteigs, der durch entsprechende ausgleichende Maßnahmen Rechnung getragen werden muß. Der am Ende eines Arbeits- tages verbleibende Restteiganfall ist praktisch verloren, was entsprechend hohe Verluste und Kosten verursacht.

Es gibt verschiedene Versuche, diesen Restteig durch eine entsprechende Aufbereitung wieder so vollwertig zu machen, daß er ohne Qualitätseinbuße für das Endprodukt den jeweiligen Teigerzeugungsanlagen zugeführt werden kann. Allerdings blieben diese Anstrengungen sämtlich ohne durchschlagenden Erfolg. Dies läßt sich insbesondere am Beispiel der Blätter- und Plunderteige erläutern, die aus einer Vielzahl von aufeinandergeschichteten Lagen Teig-Fett-Teig geschichtet und ausgewalzt werden. Es liegt auf der Hand, daß in diesem Fall der Fettanteil der mit einem Restteig zur Verarbeitung gelangenden Chargen stetig ansteigt und damit zu nachhaltigen Qualitätsänderungen der Erzeugnisse führen muß. Gerade der Bedarf an solchen Teigen hat aber in letzter Zeit außerordentlich stark zugenommen. Damit hat sich die Problematik der Restteig-Verwertung und der hierbei bisher notwendigerweise in Kauf zu nehmenden Verluste auf ein Maß erhöht, welches dringend der Abhilfe bedarf. Die Erfindung geht davon aus, daß der Gehalt eines Teiges, wie eines Restteiges aus der Teigverarbeitung, an Zutaten, wie Hefe, Salz oder anderen Gewürzen, Fett und weiteren Bestandteilen bekannt ist, und zwar in der absoluten Menge wie vor allem auch relativ. Dieser Ansatz führt jedoch nur dann zu einer wirklich befriedigenden und wirtschaftlich vertretbaren Lösung des Problems, wenn, gemäß der Grunderkenntnisse der Erfindung, der Restteig in einer lagerfähigen und in seiner Erscheinungsform derjenigen der Grundbestandteile des Neuteigs ähnlichen Form vorliegt, in welcher er mit diesen Ursprungszutaten zu einem vollwertigen Neuteig ver- arbeitet werden kann.

Ausgehend von diesem allgemeinen Grundgedanken wird bei einem Verfahren der eingangs bezeichneten Art der Restteig zu einem Teigband geformt, das Teigband zerkleinert und zermahlen sowie mit Mehl und gegebenenfalls weiteren trockenen Zutaten in einem dem Neuteig entsprechenden Verhältnis vermischt, getrocknet und in Form eines rieselfähigen, feinkörnigen, lagerfähigen Substrats ausgetragen. Hierbei bildet das Teigband die sinnvolle Voraussetzung für ein wirksames Zerkleinern der Restteigmenge und anschließender Vermahlung bis zu dem gewünschten feinkörnigen, rieselfähigen Produkt. Durch die Zugabe von Mehl und entsprechende Verfahrensführung wird ein Zusammenbacken der Teigteilchen ausgeschlossen, wobei aber der Bemessung des Mehls und gegebenenfalls anderer Zutaten eine entscheidende Bedeutung insofern zukommt, als bei Nichtbeachtung dieser Maßnahme kein dem ursprünglichen Neuteig entsprechendes Produkt entsteht. Es entspricht der Erkenntnis der Erfindung, daß ein feinkörniges Substrat als Enderzeugnis dieses Verfahrens nicht nur die angemessen lange Lagerzeit gewährleistet, sondern darüber hinaus die Gewähr dafür bietet, daß das Substrat infolge seines mehlartigen Charakters bei einer neuen Chargierung eine völlig gleichmäßige Verteilung innerhalb der den Neuteig bildenden ursprünglichen Zutaten ermöglicht. Allerdings müssen auch in diesem Fall die anteiligen Substanzmengen des aus dem Restteig gebildeten Substrats und wiederum dessen Anteil gegenüber dem Neuteig bzw. den diesen bildeten Zutaten rechnerisch exakt berücksichtigt werden.

Das erfindungsgemäße Verfahren ist außerordentlich vielseitig. Es erschöpft sich nicht nur darin, ein lagerfähiges Substrat zu erzielen, welches dem Neuteig weitgehend entspricht, sondern es ermöglicht auch die sofortige Verwertung des gewonnenen Produkts in einem laufenden Verarbeitungsprozeß unter den vorgenannten Voraussetzungen, wenn das zerkleinerte und zermahlene Teigband mit weiteren trockenen und flüssigen Zutaten in wiederum einem dem Neuteig entsprechenden Verhältnis vermischt, geknetet und in Form eines Teigstranges ausgetragen wird. Man vermeidet hierbei das im Fall der sofortigen Weiterverarbeitung überflüssige körnige Trockensubstrat, sondern bricht den Zerkleinerungs- und Mahlprozeß gewissermaßen ab und führt das ebenfalls körnige Gut unmittelbar der neu zu bereitenden Charge eines Neuteiges zu. Beide Alternativen dieses Verfahrens bedienen sich des gleichen Grundprinzips.

Bei der erstgenannten Erfindungsalternative kann das Substrat einer Gefriertrocknung zur Verbesserung der Wasseraufnahmefähigkeit bei der Weiterverarbeitung unterzogen werden.

Die Wirksamkeit des Verfahrens setzt eine höchstmögliche Genauigkeit der Bemessung der einzelnen Anteile des zu bereitenden Teiges voraus. Diese Forderung realisiert die Erfindung dadurch, daß die Prozeßführung, insbesondere der Zusatz der Zutaten, durch einen Prozeßrechner gesteuert wird. Diese Maßnahme bildet die Gewähr für einen weitgehend automatischen Ablauf des Verfahrens zum Aufarbeiten von Restteig zu Neuteig.

Die Erfindung weist darüber hinaus einen Weg zur Ausgestaltung einer Vorrichtung zur Durchführung des vorbeschriebenen Verfahrens. Eine solche Vorrichtung besteht aus einer liegend angeordneten, zylindrischen Trommel mit einer seitlichen Aufgabeöffnung im Bereich des einen Endes und einem Austrag im Bereich des anderen Endes und mit einem in der Trommel um die Zylinderachse schnell umlaufenden zylindrischen Werkzeugträger mit nahe des Trommelmantels verlaufenden Schneidmessern zum Zerkleinern des Teigbandes auf einer äußeren Mantelfläche des Werkzeugträgers sowie mit Messerbändern auf einer inneren Mantelfläche von geringerem Radius und mit einer Förderschnecke auf der Welle des Werkzeugträgers, wobei die Trommel vor der Aufgabeöffnung mindestens eine Zuführeinrichtung für Mehl und weitere trockene Zutaten in einem dem Neuteig entsprechenden Verhältnis aufweist. Dieser ebenfalls nach Art einer gedachten Trommel gebildete Werkzeugträger bewirkt eine zunehmende Zerkleinerung des zugeführten Teigbandes zu immer kleiner werdenden Partikeln bis zu der gewünschten feinkörnigen Gestalt. Die Teigteilchen wechseln bei einem etwa in der Größenordnung mit 3000 Umdrehungen/Minute laufenden Werkzeugträger ständig von innen nach außen und umgekehrt, ohne daß ihnen Gelegenheit zum Anbacken gegeben wird. Dadurch wird zugleich eine unerwünschte Erwärmung des Teiges vermieden und seine thermische Belastung gering gehalten.

Noch mehr verbessert wird die Effektivität dieser Maßnahme dann, wenn die Zuführeinrichtung in der Nähe der Welle des Werkzeugträgers in die Trommel einmündet und die Welle in diesem Bereich der Verwirbelung des zugeführten Mehls dienende Leitbleche trägt. Die Mehlpartikel füllen gewissermaßen den gesamten Querschnitt der Trommel aus. Sie werden durch den umlaufenden Werkzeugträger ständig in Bewegung gehalten und treffen hierbei auf die Teigpartikel, umhüllen diese schließlich und wirken einem Zusammenbacken der Teilchen entgegen, indem sie einen ausgesprochenen Trocknungseffekt auf die Teigpartikel ausüben.

In weiterer Ausgestaltung der Erfindung bestehen die Schneidmesser aus mit schräg in Förderrichtung der Trommel freiragenden Messerfingern besetzten Messerträgern, die spiralförmig an dem Werkzeugträger angeordnet sind. Durch diese räumliche Gestalt der einzelnen Messer und ihre räumliche Anordnung werden von dem zugeführten Teigband schmale Teile abgeschnitten, ohne daß auf diese Druck-, Schub-, Scher- oder Quetschkräfte in einem solchen Maß einwirken, die schädigende Einflüsse auf den Teig hervorrufen können. Es hat sich als besonders vorteilhaft erwiesen, die Anordnung so zu treffen, daß der Fuß eines Messerfingers und die freie Spitze des benachbarten Messerfingers wenigstens in einer Radialebene des zylindrischen Werkzeugträgers liegen oder gar einander übergreifen.

Besonders vorteilhaft ist eine Anordnung der zylindrischen Trommel mit zum Austragsende hin geneigter Achse. Die außenliegenden Schneidmesser und die weiter innen liegenden Messerbänder des Werkzeugträgers sind um etwa 45° winkelversetzt in der Radialebene des Werkzeugträgers spiralförmig angeordnet, so daß kaum tote Räume innerhalb des mit hoher Geschwindigkeit umlaufenden Werkzeugträgers entstehen. Zweckmäßig sind nach einem anderen Merkmal der Erfindung die Messerbänder am Außenumfang der Förderschnecke befestigt. Diese Maßnahme trägt zur Stabilität des Werkzeugträgers bevorzugt bei. Sind an dem Werkzeugträger außerdem den Gutstrom nach innen richtende Leitschaufeln angeordnet, wie dies einem weiteren Merkmal der Erfindung entspricht, so werden die einer zunehmenden Zerkleinerung innerhalb der Trommel unterliegenden Teilchen, die unter Einwirkung der Zentrifugalkraft ständig nach außen bewegt werden, in der umgekehrten Bewegungsrichtung beeinflußt. Sie gelangen hierbei in den Einwirkungsbereich der inneren Werkzeugebene, die die Zerkleinerungsarbeit der Partikel fortsetzt. Hierbei erhalten die Teilchen wiederum eine zentrifugalgerichtete Beschleunigung, die sie in den Bereich der äußeren Messerebene zurückführt. Dieser Vorgang wiederholt sich über die gesamte axiale Länge der zylindrischen Trommel mehrfach und gewährleistet die zunehmende Zerkleinerung.

Am austragsseitigen Ende der zylindrischen Trommel ist vorteilhaft ein Mahlsieb in einer Radialebene angeordnet, an dessen Innenfläche schaufelförmige Werkzeuge des Werkzeugträgers umlaufen, die ein Zusetzen des Siebes verhindern. Die groben Partikel werden hierdurch in den Bereich der Zerkleinerungswerkzeuge des Werkzeugträgers zurückgeworfen, während die Teilchen mit hinreichender Feinkörnigkeit das Sieb durchsetzen.

Eine wesentliche Vervollkommnung erfährt die erfindungsgemäße Vorrichtung zur Durchführung des Verfahrens zum Aufarbeiten von Restteig zu Neuteig dann, wenn die zylindrische Trommel aus einer an dem Mahlsieb endenden Zerkleinerungszone, einer sich axial anschließenden Mahl- und Knetzone und einer weiteren sich wiederum axial anschließenden Feinmahl- und Mischzone besteht. Die Teigpartikel verlassen in der Regel das Mahlsieb in einer festen körnigen Gestalt, und sie durchlaufen, ist die Erzeugung eines rieselfähigen feinkörnigen Substrats beabsichtigt, die anschließende Mahl- und Knetzone zu der sich anschließenden dritten Zone einer solchen Trommel, wo die Zerkleinerung ebenso fortgesetzt wird, wie eine ausgesprochen intensive Durchmischung.

Nach einer weiteren Ausgestaltung der Erfindung sind die Welle des Werkzeugträgers der ersten Zone und die in der anschließenden zweiten und dritten Zone der Trommel angeordnete Welle voneinander getrennt und im Bereich des Mahlsiebes innerhalb der Trommel gelagert. Sie sind außerdem an ihrem äußeren Ende je mit einem Antriebsmotor verbunden, durch die sie mit entgegengesetzter Drehrichtung in Umlauf versetzt werden. Die Trennung der angetriebenen Wellen hat den Vorteil der Möglichkeit einer feinstufigen Änderung der Drehzahl des Werkzeugträgers unabhängig von den in den anschließenden Zonen umlaufenden Elementen und umgekehrt. Auf diese Weise kann der Prozeßablauf höchst individuell geregelt werden, was den erwünschten Eigenschaften des zu gewinnenden Substrats zugute kommt. Erfindungsgemäß ist der Austrag für das feinkörnige Substrat in der dritten Zone der Trommel angeordnet.

Eine weitere Alternative der Ausgestaltung erfährt die Erfindung in der Weise, daß die zweite und dritte Zone durch eine druckdichte Trennwand voneinander trennbar sind und der Austrag für den Neuteig in der zweiten Zone der Trommel angeordnet ist. Diese Variante kommt dann zur Anwendung, wenn der Restteig unmittelbar zu einem neuen Teig verarbeitet wird unter Ausschaltung der Gewinnung eines lagerfähigen Produktes. An die Austragsöffnung aus der Trommel kann sich ein Fördertisch üblicher Art zum Abtransport des austretenden Teigstranges anschließen. Die druckdichte Trennwand ist lösbar angeordnet, so daß der Übergang von der einen Verfahrensweise zur anderen keine Schwierigkeiten bereitet.

In weiterer Ausgestaltung der Erfindung ist der Trommel ein den aufzuarbeitenden Restteig zuführendes Förderband vorgeschaltet. Dieses arbeitet wiederum mit einem an sich bekannten Teigbandformer zusammen, so daß der Restteig in einer von der Trommel leicht aufzunehmenden und von den Werkzeugen des Werkzeugträgers ohne weiteres zerkleinerungsfähigen Form zugeführt wird. Eine andere Alternative besteht darin, an die Aufgabeöffnung der Trommel einen den Restteig unter Druck zuführenden Förderkanal druckdicht anzuschließen. Dieser bildet im allgemeinen ein flaches Rechteck, so daß wiederum ein Teigstrang entsteht, der von den Werkzeugen des umlaufenden Werkzeugträgers sofort wirksam zerkleinert werden kann. Die dabei zu erzielende Korngröße ist von dem gewünschten Endzustand des Substrats abhängig und wird wiederum vom Prozeßrechner über die automatische Drehzahleinstellung der Antriebsmotore, insbesondere des Antriebs des Werkzeugträgers, gesteuert.

Die Erfindung sieht weiter vor, daß an dem Förderkanal zum Zuführen des Restteiges ein Ultraschallgenerator und gegebenenfalls ein Anschluß zum Zuführen eines Kältemittels angeordnet sind. Hierdurch wird eine Beeinflußung der physikalischen und biochemischen Eigenschaften des Teiges bewirkt, und es werden bereits Voraussetzungen für eine besonders feine Zerkleinerung beim Eintritt in die Trommel geschaffen. Das Kältemittel kann beispielsweise aus flüssigem Stickstoff bestehen, welcher ganz kurzfristig eine wirksame starke Abkühlung des Teiges herbeiführt.

In analoger Weise können an der zweiten Zone der Trommel Anschlüsse zum Zuführen von auch flüssigen Zutaten des Teiges, und/oder eines Kältemittels und/oder Druckluft angeordnet sein. Zweckmäßig münden diese Anschlüsse tangential in die Trommel ein. Die Druckluft unterstützt den kurzzeitig wirkenden Abkühlungsprozeß der Restteigpartikel auf etwa minus 80 bis 90°C innerhalb der Trommel.

Schließlich sind nach einem anderen Merkmal der Erfindung an der dritten Zone der Trommel ein Ultraschallgenerator und/oder ein Mikrowellenstrahler und/oder ein Vakuumanschluß angeordnet, die wiederum zur wirksamen Beeinflussung des Feinmahlprozesses unterstützend herangezogen werden.

Weitere Merkmale, Einzelheiten und Vorteile der Erfindung ergeben sich aus der folgenden Beschreibung einiger bevorzugter Ausführungsformen der Erfindung sowie anhand der Zeichnung. Hierbei zeigen:
- Fig. 1: eine schematische, teilweise längsgeschnittene Ansicht der Vorrichtung;
- Fig. 2: eine erste Art der Teigzuführung und
- Fig. 3: eine abgewandelte Teigzuführung zu der Trommel,
- Fig. 4: den in der Trommel angeordneten Werkzeugträger;
- Fig. 5: ein Detail des Werkzeugträgers und
- Fig. 6: eine Einzelheit der Werkzeuge in vergrößerter Darstellung;

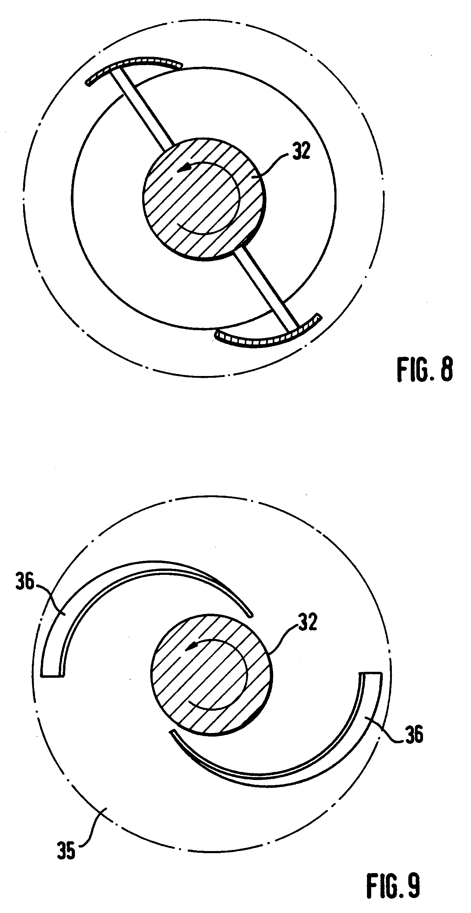

- Fig. 7: einen Schnitt etwa nach Linie VII-VII in Fig. 4;
- Fig. 8: einen Schnitt etwa nach Linie VIII-VIII in Fig. 4;
- Fig. 9: einen Schnitt etwa nach Linie IX-IX in Fig. 4 und
- Fig. 10: eine abgewandelte Ausführungsform nach einer der Fig. 1 entsprechenden Darstellung.

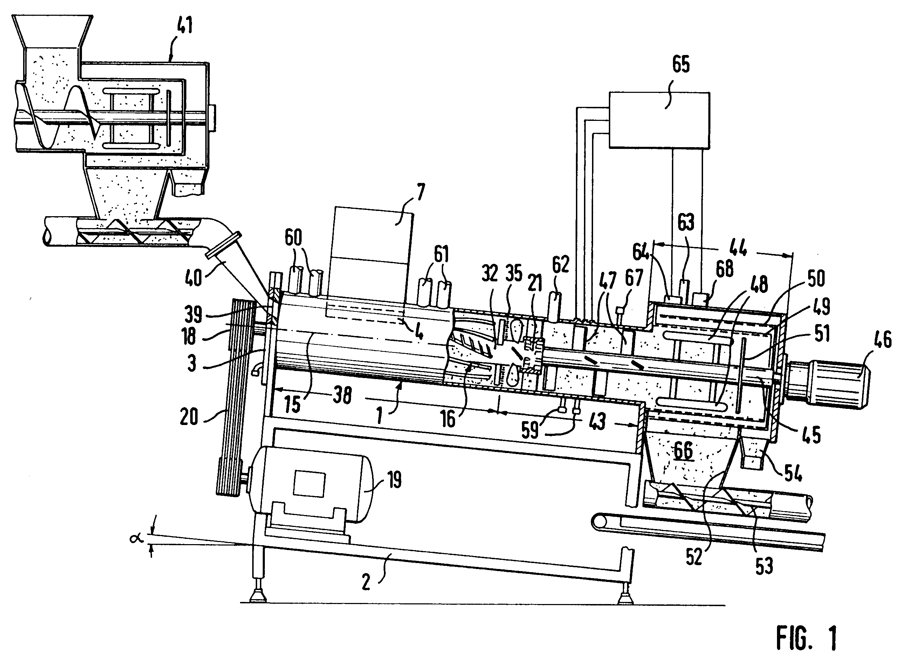

Die Vorrichtung nach Fig. 1 besteht aus einer Trommel 1, die mit einer Neigung α von etwa 10° auf einem Untergestell 2 gelagert ist. Im Bereich des mit einer Verschlußplatte 3 versehenen höher liegenden Endes ist eine Aufgabeöffnung 4 vorgesehen, die der Zuführung eines Teigbandes 5 dient. Der Restteig wird bei 6 einer Bandformeinrichtung 7 aufgegeben. Er verläßt diese in Form des Teigbandes 5 auf dem Förderbandtisch 8, der zuvor von einer Bemehlungseinrichtung 9 mit Mehl bestreut wird. Eine anschließende Bemehlungseinrichtung 10 bestreut die Oberseite des Teigbandes 5. Dieses passiert vor der Aufgabe in die Trommel 1 eine Egalisierwalze 11.

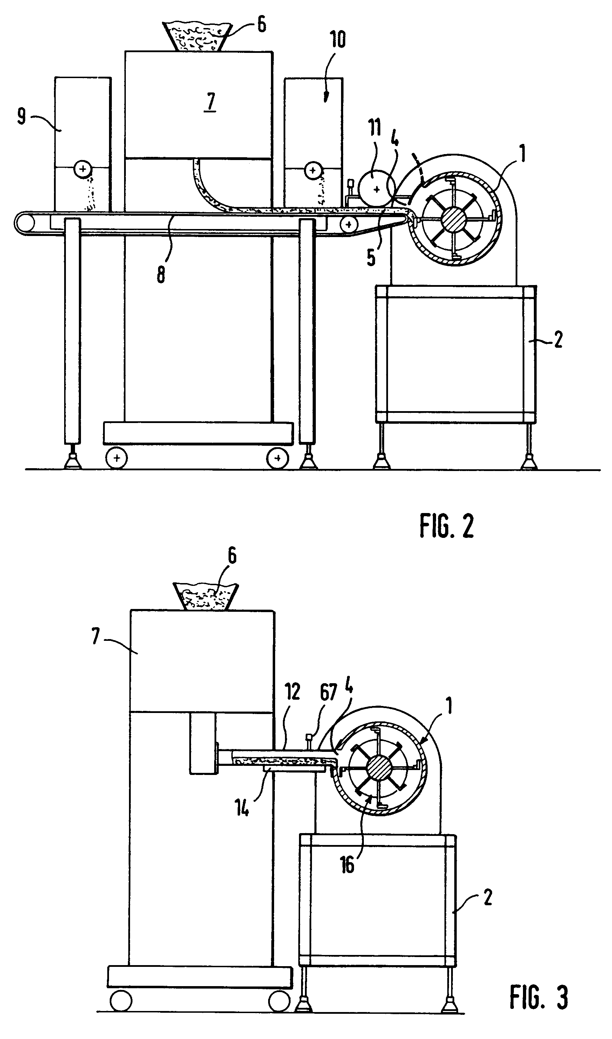

Eine alternative Teigzuführeinrichtung läßt die Fig. 3 erkennen. Dort wird der Teig durch einen Kanal 12 mit etwa rechteckigem Querschnitt unter Druck gefördert. Der Kanal 12 ist druckdicht an die Aufgabeöffnung 4 der Trommel 1 angeschlossen. An seiner Unterseite ist der Kanal 12 mit einem Ultraschallgenerator 14 verbunden.

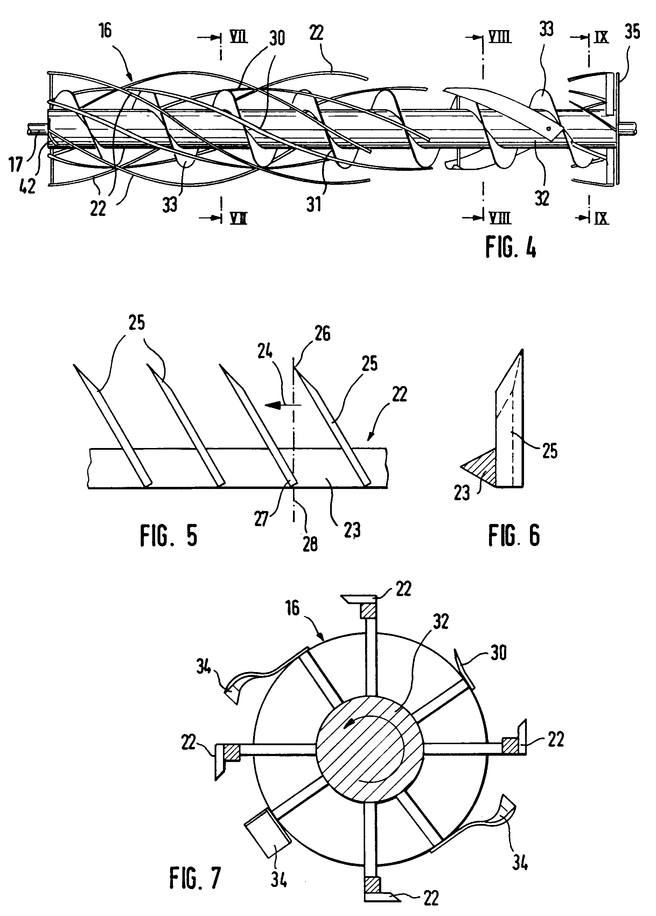

Die Längsachse 15 der Trommel 1 ist auf dem Untergestell 2 mit einem Winkel α von etwa 10° geneigt angeordnet. Im Inneren der zylindrischen Trommel 1 ist ein ebenfalls etwa trommelförmiger Werkzeugträger 16 angeordnet, dessen Welle 17 die Verschlußplatte 3 am oberen Ende der Trommel 1 durchsetzt und eine Riemenscheibe 18 für den sie mit dem auf dem Untergestell 2 angeordneten Antriebsmotor 9 verbindenden Riementrieb 20 trägt. Das andere Ende der Welle 17 ruht in einem Lager 21 im Inneren der Trommel 1. Dieser Werkzeugträger 16 weist in einer äußeren Mantelfläche Schneidmesser 22 auf. Diese bestehen je aus einem Messerträger 23, der mit schräg zur Förderrichtung 24 der Trommel 1 verlaufenden Messerfingern 25 besetzt ist. Diese sind in einem solchen Abstand zueinander angebracht, daß, wie insbesondere Fig. 5 erkennen läßt, die Spitze 26 eines Schneidfingers 25 die durch den Fuß 27 des benachbarten Messerfingers 25 gelegte Radialebene 28 geringfügig übergreift. Die diese Schneidmesser 22 tragende Mantelfläche befindet sich im Abstand von 1 bis 2 mm von der Innenfläche der Trommelwandung. In einer inneren Mantelfläche des Werkzeugträgers 16 sind, um etwa 45° in der Radialebene versetzt, Messerbänder 30 angebracht. Sie sind auf dem Außenumfang 31 der den Innenzylinder 32 des Messerträgers 16 umgebenden Förderschnecke 33 befestigt. Außerdem sind an dem Werkzeugträger 16 schaufelartige Strömungsleitbleche 34 angebracht, die auf einer äußeren Umlaufbahn liegen und die im Trommelinneren herrschende Strömung zentripedal nach innen richten. Am unteren Ende des Werkzeugträgers 16 ist ein Mahlsieb 35 angebracht, gegen dessen Innenseite bei der wiedergegebenen Ausführungsform zwei schaufelförmige Werkzeuge 36 angestellt sind. Das Mahlsieb 35 schließt die mit 38 bezeichnete erste Zone der Trommel 1 ab, welche vornehmlich der Zerkleinerung des durch die Aufgabeöffnung 4 in die Trommel 1 eingeführten Teigbandes dient.

In der Verschlußplatte 3 am oberen Ende der Trommel 1 befindet sich die Einmündung 39 für einen Stutzen 40, der mit dem Mehldosierer 41 verbunden ist und Mehl in das Innere der Trommel 1 einführt. Diese Öffnung 39 befindet sich nahe des Innenzylinders 32 des Werkzeugträgers 16. In diesem Bereich weist der Werkzeugträger 16 Leitbleche 42 auf, die das zugeführte Mehl verwirbeln.

An die Zone 38 schließt sich die zweite, mit 43 bezeichnete Zone der Trommel 1 an, die der kombinierten Mahl- und Knetfunktion dient. Anschließend findet sich die dritte Zone 44 mit der Feinmahlung und dem Austrag des feinkörnigen Substrats. Durch die beiden Zonen 43 und 44 erstreckt sich eine zentrale Welle 45, an derem äußeren Ende der Antriebsmotor 46 angreift, und deren inneres Ende in dem Lager 21 abgestützt ist. Die Drehrichtung dieser Welle 45 ist entgegengesetzt zu der Welle 17 des Werkzeugträgers 16. Auf der Welle 45 sind in der Zone 43 winkelverstellbare Mahl- und Knetflügel 47 angebracht, während im Bereich der Zone 44 paddelartige Mahl- und Mischwerkzeuge 48 vorgesehen sind. Im Bereich der Zone 44 ist die Trommel 1 erweitert. Der Raum wird nach außen durch zwei konzentrisch umeinander angeordnete Siebe 49 und 50 umschlossen. Eine Prallplatte 51 axial hinter den Werkzeugen 48 dient zur Abscheidung von weniger fein zerkleinerten Agglomeraten. Durch den tricherförmigen Austrag 52 an der Unterseite der Zone 44 der Trommel 1 gelangt das die beiden Siebe 49, 50 durchdringende feinkörnige Gut in den Elevatorförderer 53. Ein zusätzlicher nachgeschalteter Austrag 54 nimmt gegebenenfalls verbleibende grobe Teilchen auf.

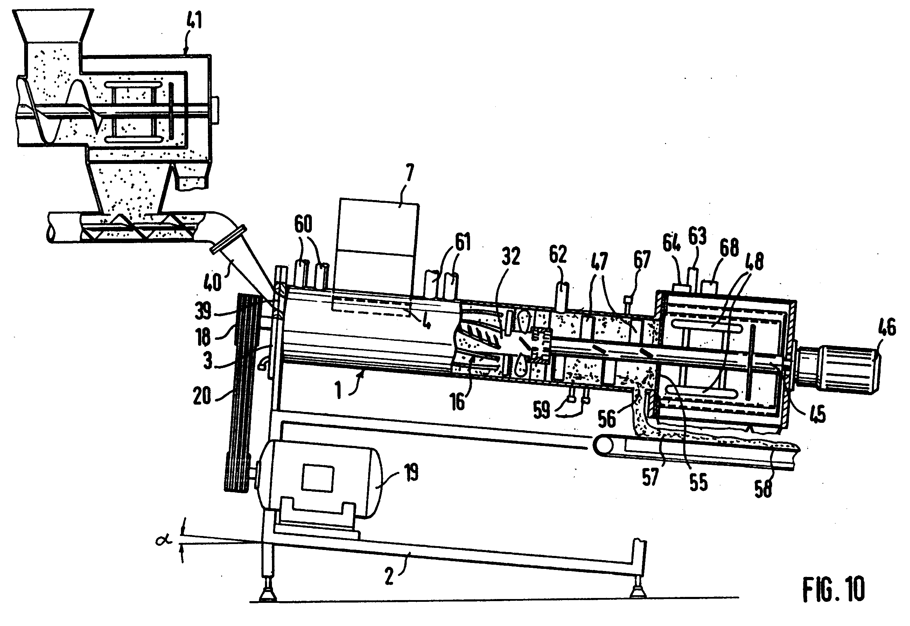

Die in Fig. 10 dargestellte Ausführungsform weicht insofern von derjenigen nach Fig. 1 ab, als die beiden Zonen 43 und 44 durch eine lösbare Trennwand 55 druckdicht voneinander abgeschlossen sind. Außerdem ist im Boden der Trommel 1, unmittelbar vor der Trennwand 55 eine Austragöffnung 56 vorgesehen, durch die der in der zweiten Zone 43 erzeugte Teig in Form eines Stranges 57 austritt und auf dem Fördertisch 58 auftrifft, der ihn der weiteren Verarbeitung zuführt.

Zusätzlich zu dem der Mehlzuführung dienenden Stutzen 40 münden weitere z. B. rohrförmige Anschlüsse 60 und 61 in die vorwiegend der Zerkleinerung dienende Zone 38 der Trommel 1 ein. Durch sie können weitere Zutaten eingeführt werden. In analoger Weise dient der in die Zone 43 einmündende Anschluß 62 ebenfalls der Zuführung von Zutaten, insbesondere auch flüssigen Zutaten, z. B. Wasser, wenn nämlich, wie in Fig. 10 dargestellt, die letzte Zone 44 abgetrennt ist und in der vorgeschalteten Zone 43 der Trommel 1 ein Neuteig geknetet werden soll. Durch die Anschlußstutzen 59 können gegebenenfalls ein Kältemittel, gegebenenfalls flüssiger Stickstoff, und auch Druckluft zugeführt werden. Diese Anschlüsse münden annähernd tangential in die Trommel 1 ein. In Verbindung mit der Zone 44 stehen bei der wiedergegebenen Ausführungsform beispielsweise ein Ultraschallgeber 64, ein Mikrowellenstrahler 68 und ein Anschluß 63 zur Verbindung mit einer Vakuumquelle.

Die Prozeßführung in der Vorrichtung wird durch einen lediglich in Fig. 1 schematisch dargestellten Prozeßrechner 65 nach einen vorgegebenen Programm gesteuert. Dieser steht mit den ganzen Prozeßablauf in der Trommel 1 überwachenden Meß- und Kontrollgeräten in Verbindung. Außerdem steuert er nicht nur die Zugabe von Mehl aus dem Dosierer 41, sondern auch die Zuführung weiterer Zutaten durch die hierzu vorgesehenen Anschlüsse in den einzelnen Zonen, wiederum nach Maßgabe der Bindung an das vorgegebene Programm.

Dem Austragstrichter 52 für das hier gewonnene feinkörnige Substrat 66 kann sich gegebenenfalls ein Zyklon anschließen, in welchem die Festkörper-Partikel abgetrennt werden. Dies ist, da für sich verständlich, im einzelnen nicht dargestellt.

## Patentansprüche

1. Verfahren zum Aufarbeiten von Restteig zu Neuteig, wobei der Restteig zu einem Teigband (5) geformt und unter Zugabe (40, 60, 61) von Mehl und weiteren trockenen Zutaten in einem dem Neuteig entsprechenden Verhältnis zerkleinert (38) und zermahlen (43), getrocknet und in Form eines rieselfähigen, feinkörnigen, lagerfähigen Substrats (66) ausgetragen wird.

2. Verfahren zum Aufarbeiten von Restteig zu Neuteig, wobei der Restteig zu einem Teigband (5) geformt und unter Zugabe (40, 60, 61) von Mehl und weiteren trockenen Zutaten zerkleinert (38) und zermahlen (43) sowie anschließend mit weiteren flüssigen Zutaten (59,62) vermischt, geknetet und in Form eines Teigstranges (57) ausgetragen wird, und die Zutaten in einem dem Neuteig entsprechenden Verhältnis stehen.

3. Verfahren nach Anspruch 1, wobei das Substrat (66) einer Gefriertrocknung zur Verbesserung der Wasseraufnahmefähigkeit bei der Weiterverarbeitung unterzogen wird.

4. Verfahren nach mindestens einem der Ansprüche 1 bis 3, wobei die Prozeßführung, insbesondere der Zusatz der Zutaten, durch einen Prozeßrechner (65) gesteuert wird.

5. Vorrichtung zur Durchführung des Verfahrens nach Anspruch 1, gekennzeichnet durch eine liegend angeordnete zylindrische Trommel (1) mit einer seitlichen Aufgabeöffnung (4) im Bereich des einen Endes und einem Austrag (52) im Bereich des anderen Endes, mit einem in der Trommel (1) liegenden, zylindrischen Werkzeugträger (16), der um die Längsachse der Trommel (15) in einen schnellen Umlauf versetzbar ist, mit Schneidmessern (22) zum Zerkleinern des Teigbandes auf einer zur Trommelinnenwandung im Abstand liegenden Mantelfläche von größerem Radius sowie Messerbändern (30) auf einer den Werkzeugträger (16) im Abstand umgebenden Mantelfläche von kleinerem Radius und einer Förderschnecke (33) auf dem Werkzeug-träger (16), wobei die Trommel (1) vor der Aufgabe-öffnung (4) mindestens eine Zuführeinrichtung (39 bis 41) für Mehl und weitere trockene Zutaten aufweist.

6. Vorrichtung zur Durchführung des Verfahrens nach Anspruch 2, gekennzeichnet durch eine liegend angeordnete zylindrische Trommel (1) mit einer seitlichen Aufgabeöffnung (4) im Bereich des einen Endes und einem Austrag (52) im Bereich des anderen Endes, mit einem in der Trommel (1) liegenden, zylindrischen Werkzeugträger (16), der um die Längsachse der Trommel (15) in einen schnellen Umlauf versetzbar ist, mit Schneidmessern (22) zum Zerkleinern des Teigbandes auf einer zur Trommelinnenwandung im Abstand liegenden Mantelfläche von größerem Radius sowie Messerbändern (30) auf einer den Werkzeugträger (16) im Abstand umgebenden Mantelfläche von kleinerem Radius und einer Förder-schnecke (33) auf dem Werkzeugträgers (16), wobei die Trommel (1) vor der Aufgabeöffnung (4) mindestens eine Zuführeinrichtung (39 bis 41, 60) für Mehl und weitere trockene Zutaten und nach der Aufgabeöffnung (4) eine Zuführeinrichtung (62) für flüssige Zutaten aufweist.

7. Vorrichtung nach Anspruch 5 oder 6, wobei die Schneidmesser (22) aus mit schräg in Förderrichtung (24) der Trommel (1) freiragenden Messerfingern (25) besetzten Messerträgern (23) bestehen, die spiralförmig an dem Werkzeugträger (16) angeordnet sind.

8. Vorrichtung nach Anspruch 7, wobei der Fuß (27) eines Messerfingers (25) und die freie Spitze (26) des benachbarten Messerfingers (25) wenigstens in einer Radialebene (28) des zylindrischen Werkzeugträgers (16) liegen oder einander übergreifen.

9. Vorrichtung nach mindestens einem der Ansprüche 5 bis 8, wobei die zylindrische Trommel (1) mit zum Austragsende geneigter Achse (15) angeordnet ist.

10. Vorrichtung nach mindestens einem der Ansprüche 5 bis 9, wobei die Schneidmesser (22) und die Messerbänder (30) um etwa 45° winkelversetzt in der Radialebene des Werkzeugträgers (16) angeordnet sind.

11. Vorrichtung nach mindestens einem der Ansprüche 5 bis 10, wobei die Messerbänder (30) am Außenumfang (31) der Förderschnecke (33) befestigt sind.

12. Vorrichtung nach mindestens einem der Ansprüche 5 bis 11, wobei an dem Werkzeugträger (16) zusätzliche Strömungsleitbleche (34) angeordnet sind, die die Strömung zentripedal nach innen richten.

13. Vorrichtung nach mindestens einem der Ansprüche 5 bis 11, wobei am austragseitigen Ende der zylindrischen Trommel (1) ein Mahlsieb (35) in einer Radialebene angeordnet ist, an dessen Innenfläche schaufelförmige Werkzeuge (36) des Werkzeugträgers (16) umlaufen.

14. Vorrichtung nach einem der Ansprüche 5 bis 13, wobei die Zuführeinrichtung (39 bis 41) in Nähe der Welle (32) des Werkzeugträgers (16) in die Trommel (1) einmündet und die Welle (32) in diesem Bereich der dem Verwirbelung dienende Leitbleche (42) trägt.

15. Vorrichtung nach mindestens einem der Ansprüche 5 bis 14, wobei die zylindrische Trommel (1) aus einer an dem Mahlsieb (35) endenden Zerkleinerungszone (38), einer sich axial anschließenden Mahl- und Knetzone (43) und einer weiteren sich wiederum axial anschließenden Feinmahl- und Mischzone (44) besteht.

16. Vorrichtung nach mindestens einem der Ansprüche 5 bis 15, wobei die Welle des Werkzeugträgers (16) der ersten Zone (38) und die in der zweiten und dritten Zone (43, 44) angeordnete Welle (45) getrennt und im Bereich des Mahlsiebes (35) innerhalb der Trommel (1) gelagert sowie an ihrem äußeren Ende je mit einem Antriebsmotor (19, 46) verbunden sind und in entgegengesetzter Drehrichtung umlaufen.

17. Vorrichtung nach einem der Ansprüche 5 bis 16, wobei der Austrag für das feinkörnige Substrat (66) in der dritten Zone (44) der Trommel (1) angeordnet ist.

18. Vorrichtung nach Anspruch 17, wobei die Welle (45) in der zweiten Zone (43) mit winkelverstellbaren Mahl- und Knetflügeln (47) besetzt ist.

19. Vorrichtung nach Anspruch 14 oder 18, wobei die Welle (45) in der dritten Zone (44) mit paddelartigen Mahl- und Mischwerkzeugen (48) besetzt ist.

20. Vorrichtung nach einem der Ansprüche 5 bis 19, wobei die zweite und dritte Zone (43, 44) durch eine druckdichte Trennwand (55) voneinander trennbar sind und der Austrag (56) für den Neuteig in der zweiten Zone (43) der Trommel (1) angeordnet ist.

21. Vorrichtung nach einem der Ansprüche 5 bis 20, wobei der Trommel (1) ein den Restteig zuführendes Förderband (8) vorgeschaltet ist.

22. Vorrichtung nach einem der Ansprüche 5 bis 21, wobei an die Aufgabeöffnung der Trommel (1) ein den Restteig unter Druck zuführender Förderkanal (12) druckdicht angeschlossen ist.

23. Vorrichtung nach mindestens einem der Ansprüche 20 bis 22, wobei an den Förderkanal (12) zum Zuführen des Restteiges ein Ultraschallgenerator (14) und Anschlüsse (67) zum Zuführen eines Kältemittels angeordnet sind.

24. Vorrichtung nach mindestens einem der Ansprüche 5 bis 23, wobei an der zweiten Zone (43) der Trommel (1) Anschlüsse (59, 62, 67) zum Zuführen von auch flüssigen Zutaten, eines Kältemittels und/oder Druckluft angeordnet sind.

25. Vorrichtung nach mindestens einem der Ansprüche 5 bis 24, wobei an der dritten Zone (44) der Trommel (1) ein Ultraschallgenerator (64), ein Mikrowellenstrahler (68) und/oder Anschlüsse (63) für eine Vakuumquelle angeordnet sind.

## Claims

1. Method of processing left-over dough into new dough, wherein the left-over dough is formed into a dough strip (5) and, with the addition (40, 60, 61) of flour and other dry ingredients, is masticated (38) and pulped (43) in a ratio corresponding to new dough, is dried, and is removed in the form of a pourable, fine-grained, storable substrate (66).

2. Method of processing left-over dough into new dough, wherein the left-over dough is formed into a dough strip (5) and, with the addition (40, 60, 61) of flour and other dry ingredients, is masticated (38) and pulped (43), and then mixed with other liquid ingredients (59, 62), kneaded, and removed in the form of a dough strand (57), and the ingredients have the same ratio as in new dough.

3. Method according to claim 1, wherein the substrate (66) is subjected to freeze-drying to improve its water-absorbing properties in further processing.

4. Method according to at least one of claims 1 to 3, wherein the procedure, in particular the addition of ingredients, is controlled by a process control computer (65).

5. Apparatus for carrying out the method according to claim 1, characterised by a cylindrical drum (1) disposed lying down, comprising a lateral feed aperture (4) in the region of one end, an outlet (52) in the region of the other end, a cylindrical tool holder (16) lying inside the drum (1) and displaceable in rapid rotation about the longitudinal axis of the drum (15), cutting blades (22) for masticating the dough strip on a generated surface that lies at a distance from the drum inner wall and has a larger radius, and cutting strips (30) on a generated surface of smaller radius, surrounding the tool holder (16) with clearance, and a worm conveyor (33) on the tool holder (16), wherein the drum (1) has in front of the feed aperture (4) at least one feed device (39 to 41) for flour and other dry ingredients.

6. Apparatus for carrying out the method according to claim 2, characterised by a cylindrical drum (1) disposed lying down, comprising a lateral feed aperture (4) in the region of one end, an outlet (52) in the region of the other end, a cylindrical tool holder (16) lying inside the drum (1) and displaceable in rapid rotation about the longitudinal axis of the drum (15), cutting blades (22) for masticating the dough strip on a generated surface that lies at a distance from the drum inner wall and has a larger radius, and cutting strips (30) on a generated surface of smaller radius, surrounding the tool holder (16) with clearance, and a worm conveyor (33) on the tool holder (16), wherein the drum (1) has in front of the feed aperture (4) at least one feed device (39 to 41, 60) for flour and other dry ingredients, and after the feed aperture (4) a feed device (62) for liquid ingredients.

7. Apparatus according to claim 5 or 6, wherein the cutting blades (22) consist of blade carriers (23) equipped with blade fingers (25) projecting freely and obliquely in the direction of travel (24) of the drum (1), said blade carriers (23) being arranged in a spiral manner on the tool holder (16).

8. Apparatus according to claim 7, wherein the foot (27) of a blade finger (25) and the free point (26) of the adjacent blade finger (25) lie at least in one radial plane (28) of the cylindrical tool holder (16) or overlap one another.

9. Apparatus according to at least one of claims 5 to 8, wherein the cylindrical drum (1) is arranged with its axis (15) inclined to the outlet end.

10. Apparatus according to at least one of claims 5 to 9, wherein the cutting blades (22) and the blade strips (30) are disposed angled at 45° in the radial plane of the tool holder (16).

11. Apparatus according to at least one of claims 5 to 10, wherein the blade strips (30) are fixed to the outer circumference (31) of the worm conveyor (33).

12. Apparatus according to at least one of claims 5 to 11, wherein additional flow baffle plates (34) are disposed on the tool holder (16) in order to direct the flow inwards in a centripetal manner.

13. Apparatus according to at least one of claims 5 to 11, wherein on the outlet end of the cylindrical drum (1) a refining sieve (35) is disposed in a radial plane, on the inner face of which shovel-like tools (36) of the tool holder (16) rotate.

14. Apparatus according to one of claims 5 to 13, wherein the feed device (39 to 41) opens into the drum (1) near the shaft (32) of the tool holder (16) and the shaft (32) carries baffle plates (42) for creating turbulence in this region.

15. Apparatus according to at least one of claims 5 to 14, wherein the cylindrical drum (1) consists of a masticating zone (38) ending with the refining sieve (35), an axially adjacent pulping and kneading zone (43), and a further, also axially adjacent, fine-pulping and mixing zone (44).

16. Apparatus according to at least one of claims 5 to 15, wherein the shaft of the tool holder (16) of the first zone (38) and the shaft (45) disposed in the second and third zones (43, 44) are mounted separately and inside the drum (1) in the region of the refining sieve (35), and are connected to a respective drive motor (19, 46) at their outer end and rotate in opposite directions.

17. Apparatus according to one of claims 5 to 16, wherein the outlet for the fine-grained substrate (66) is disposed in the third zone (44) of the drum (1).

18. Apparatus according to claim 17, wherein the shaft (45) is equipped with angle-adjustable pulping and kneading fins (47) in the second zone (43).

19. Apparatus according to claim 14 or 18, wherein the shaft (45) is equipped with paddle-like pulping and kneading tools (48) in the third zone (44).

20. Apparatus according to one of claims 5 to 19, wherein the second and third zones (43, 44) are capable of being separated from one another by a pressure-tight partition wall (55), and the outlet (56) for the new dough is disposed in the second zone (43) of the drum (1).

21. Apparatus according to one of claims 5 to 20, wherein the drum (1) is connected upstream of a conveyor belt (8) for supplying the left-over dough.

22. Apparatus according to one of claims 5 to 21, wherein a conveyor channel (12) supplying the left-over dough under pressure is connected to the feed aperture of the drum (1) in a pressure-tight manner.

23. Apparatus according to at least one of claims 20 to 22, wherein an ultrasound generator (14) and terminals (67) for supplying a coolant are disposed on the conveyor channel (12) for supplying the left-over dough.

24. Apparatus according to at least one of claims 5 to 23, wherein terminals (59, 62, 67) for supplying liquid ingredients also, a coolant, and/or compressed air are disposed on the second zone (43 ) of the drum (1).

25. Apparatus according to at least one of claims 5 to 24, wherein an ultrasound generator (64), a microwave emitter (68), and/or terminals (63) for a vacuum source are disposed on the third zone (44) of the drum (1).

## Revendications

1. Procédé pour la transformation d'une pâte résiduelle en une nouvelle pâte, la pâte résiduelle étant façonnée en un ruban de pâte (5), étant fragmentée (38) et broyée (43) avec adjonction (40, 60, 61) de farine et d'autres ingrédients secs, en une proportion correspondant à la nouvelle pâte, puis étant séchée et délivrée sous la forme d'un substrat (66) coulant, à grains fins et apte au stockage.

2. Procédé pour la transformation d'une pâte résiduelle en une nouvelle pâte, la pâte résiduelle étant façonnée en un ruban de pâte (5), étant fragmentée (38) et broyée (43) avec adjonction (40, 60, 61) de farine et d'autres ingrédients secs, ensuite de quoi elle est mélangée (59, 62) à d'autres ingrédients fluides, pétrie, puis délivrée sous la forme d'un boudin de pâte (57), et les ingrédients sont présents en une proportion correspondant à la nouvelle pâte.

3. Procédé selon la revendication 1, dans lequel le substrat (66) est soumis à une lyophilisation en vue d'améliorer la propriété hygroscopique au stade de la transformation ultérieure.

4. Procédé selon au moins l'une des revendications 1 à 3, dans lequel la conduite du processus, en particulier l'adjonction des ingrédients, est commandée par l'intermédiaire d'un calculateur industriel (65).

5. Appareil pour la mise en oeuvre du procédé selon la revendication 1, caractérisé par un tambour cylindrique (1) à disposition couchée, muni d'un orifice latéral de déversement (4) dans la région de l'une des extrémités et d'une évacuation (52) dans la région de l'autre extrémité, comprenant un porte-outils cylindrique (16) logé dans le tambour (1) et auquel une rotation rapide peut être imprimée autour de l'axe longitudinal (15) dudit tambour, des lames de sectionnement (22) pour fragmenter le ruban de pâte sur une surface d'enveloppe de grand rayon, située à distance de la paroi intérieure du tambour, des bandes de sectionnement (30) sur une surface d'enveloppe de rayon plus petit, entourant à distance le porte-outils (16), ainsi qu'une vis sans fin de convoyage (33) sur ledit porte-outil s (16), le tambour (1) présentant, avant l'orifice de déversement (4), au moins un dispositif (39 à 41) d'amenée de farine et d'autres ingrédients secs.

6. Appareil pour la mise en oeuvre du procédé selon la revendication 2, caractérisé par un tambour cylindrique (1) à disposition couchée, muni d'un orifice latéral de déversement (4) dans la région de l'une des extrémités et d'une évacuation (52) dans la région de l'autre extrémité, comprenant un porte-outils cylindrique (16) logé dans le tambour (1) et auquel une rotation rapide peut être imprimée autour de l'axe longitudinal (15) dudit tambour, des lames de sectionnement (22) pour fragmenter le ruban de pâte sur une surface d'enveloppe de grand rayon, située à distance de la paroi intérieure du tambour, des bandes de sectionnement (30) sur une surface d'enveloppe de rayon plus petit, entourant à distance le porte-outils (16), ainsi qu'une vis sans fin de convoyage (33) sur ledit porte-outils (16), le tambour (1) présentant, avant l'orifice de déversement (4) , au moins un dispositif (39 à 41, 60) d'amenée de farine et d'autres ingrédients secs et, après l'orifice de déversement (4), un dispositif (62) d'amenée d'ingrédients fluides.

7. Appareil selon la revendication 5 ou 6, dans lequel les lames de sectionnement (22) consistent en des porte-lames (23) qui sont garnis de doigts de sectionnement (25) saillant librement, à l'oblique, dans le sens de convoyage (24) du tambour (1), et sont agencés hélicoïdalement sur le porte-outils (16).

8. Appareil selon la revendication 7, dans lequel la base (27) d'un doigt de sectionnement (25) et la pointe libre (26) du doigt de sectionnement (25) voisin se situent au moins dans un plan radial (28) du porte-outils cylindrique (16), ou se coiffent mutuellement.

9. Appareil sel on au moins l'une des revendications 5 à 8, dans lequel l'axe (15) du tambour cylindrique (1) est incliné vers l'extrémité évacuation.

10. Appareil selon au moins l'une des revendications 5 à 9, dans lequel les lames de sectionnement (22) et les bandes de sectionnement (30) sont disposées dans le plan radial du porte-outils (16), avec décalage angulaire d'environ 45°.

11. Appareil selon au moins l'une des revendications 5 à 10, dans lequel les bandes de sectionnement (30) sont fixées sur le pourtour extérieur (31) de la vis sans fin de convoyage (33).

12. Appareil selon au moins l'une des revendications 5 à 11, dans lequel des tôles supplémentaires (34) déflectrices de l'écoulement, installées sur le porte-outils (16), dirigent l'écoulement vers l'intérieur avec allure centripète.

13. Appareil selon au moins l'une des revendications 5 à 11, dans lequel un crible broyeur (35) est disposé, dans un plan radial, à l'extrémité du tambour cylindrique (1) qui est située côté évacuation, crible à la surface interne duquel une rotation est imprimée à des outils (36) en forme de pelles du porte-outils (16).

14. Appareil selon l'une des revendications 5 à 13, dans lequel le dispositif d'amenée (39 à 41) débouche dans le tambour (1) à proximité de l'arbre (32) du porte-outils (16), et l'arbre (32) porte, dans cette région, des tôles déflectrices (42) servant à la génération du mouvement tourbillonnaire.

15. Appareil selon au moins l'une des revendications 5 à 14, dans lequel le tambour cylindrique (1) se compose d'une zone de fragmentation (38) s'achevant sur le crible broyeur (35), d'une zone (43) de broyage et de pétrissage, axialement contiguë à la zone précitée, et d'une zone supplémentaire (44) de broyage fin et de malaxage qui est à son tour contiguë dans le sens axial.

16. Appareil selon au moins l'une des revendications 5 à 15, dans lequel l'arbre du porte-outils (16) de la première zone (38) et l'arbre (45) situé dans les deuxième et troisième zones (43, 44) sont séparés, sont montés à l'intérieur du tambour (1) dans la région du crible broyeur (35), sont respectivement reliés à un moteur d'entraînement (19, 46) par leur extrémité externe, et tournent dans des sens de rotation opposés.

17. Appareil selon l'une des revendications 5 à 16, dans lequel l'évacuation du substrat (66) à grains fins se trouve dans la troisième zone (44) du tambour (1).

18. Appareil selon la revendication 17, dans lequel l'arbre (45) est garni dans la deuxième zone (43), d'ailettes (47) de broyage et de pétrissage qui sont réglables angulairement.

19. Appareil selon la revendication 14 ou 18, dans lequel l'arbre (45) est garni dans la troisième zone (44), d'outils (48) de broyage et de malaxage du type palettes.

20. Appareil selon l'une des revendications 5 à 19, dans lequel les deuxième et troisième zones (43, 44) peuvent être séparées l'une de l'autre par l'intermédiaire d'une cloison séparatrice (55) tenant la pression, et l'évacuation (56) de la nouvelle pâte se trouve dans la deuxième zone (43) du tambour (1).

21. Appareil selon l'une des revendications 5 à 20, dans lequel une bande convoyeuse (8), amenant la pâte résiduelle, est installée en amont du tambour (1).

22. Appareil selon l'une des revendications 5 à 21, dans lequel un canal convoyeur (12), amenant la pâte résiduelle sous pression est raccordé à l'orifice de déversement du tambour (1) d'une manière étanche à la pression.

23. Appareil selon au moins l'une des revendications 20 à 22, dans lequel un générateur d'ultrasons (14) est implanté sur le canal convoyeur (12) pour amener la pâte résiduelle, des raccords (67), destinés à amener un agent frigorigène, étant implantés sur ledit canal.

24. Appareil selon au moins l'une des revendications 5 à 23, dans lequel des raccords (59, 62, 67) sont ménagés, dans la deuxième zone (43) du tambour (1), pour amener également des ingrédients fluides, un agent frigorigène et/ou de l'air comprimé.

25. Appareil selon au moins l'une des revendications 5 à 24, dans lequel un générateur d'ultrasons (64), un diffuseur de micro-ondes (68), et/ou des raccords (63) destinés à une source de dépression, sont implantés dans la troisième zone (44) du tambour (1).
